# EUROPÄISCHE PATENTSCHRIFT

(11) **EP 2 893 241 B1**
(45) Veröffentlichungstag und Bekanntmachung des Hinweises auf die Patenterteilung: **19.10.2016**
(21) Anmeldenummer: 13745416.1
(22) Anmeldetag: 05.08.2013
(51) Int. Cl.: F16L 33/207, F16L 13/14, F16L 19/065, F16L 37/138

(54) **FITTING, SYSTEM MIT EINEM SOLCHEN FITTING UND DICHTE VERBINDUNG MIT EINEM SOLCHEN FITTING**
FITTING, SYSTEM COMPRISING SUCH A FITTING, AND SEALED CONNECTION WITH SUCH A FITTING
RACCORD, SYSTÈME MUNI D'UN TEL RACCORD ET LIAISON ÉTANCHE AU MOYEN D'UN TEL RACCORD

(30) Priorität: 03.09.2012 DE 102012108146
(43) Veröffentlichungstag der Anmeldung: 15.07.2015
(73) Patentinhaber: Viega GmbH & Co. KG, 57439 Attendorn (DE)
(72) Erfinder: HUETTE, Andreas, 57439 Attendorn (DE); KOSCHIG, Bernd, 57439 Attendorn (DE); MEISSNER, Kai-Michael, 57223 Kreuztal (DE); SINOPLU, Sudi, 57439 Attendorn (DE)
(74) Vertreter: Cohausz & Florack
(86) Internationale Anmeldenummer: PCT/EP2013/066401
(87) Internationale Veröffentlichungsnummer: WO 2014/032911

(56) Entgegenhaltungen:
- EP-A2- 0 848 200
- US-A- 3 951 438
- US-A1- 2008 036 202

## Beschreibung

Die Erfindung betrifft ein Fitting zum dichten Verbinden an einem rohrförmigen Ende, insbesondere eines Rohres. Darüber hinaus betrifft die Erfindung auch ein System mit einem solchen Fitting und mit einer Außenhülse. Schließlich betrifft die Erfindung eine dichte Verbindung mit einem solchen Fitting und einem rohrförmigen Ende.

Im Stand der Technik ist es bekannt, rohrförmige Enden mithilfe von Fittings zu verbinden. Hierbei können die rohrförmigen Enden sowohl die eines Rohres sein als auch die von anderen Bauteilen wie beispielsweise von Armaturen. Mittels der Fittings können beispielsweise sowohl Rohre miteinander verbunden werden als auch Rohre mit anderen Bauteilen, wie beispielsweise Hähnen, Ventilstücken oder ähnlichem. Weiterhin kann das Fitting zum Beispiel auch bereits als T-Stück ausgestaltet sein.

Auch um dichte Verbindungen im Bereich der Gasleitungen oder Flüssigkeitsleitungen wie beispielsweise Wasser- und insbesondere Trinkwasserleitungen herzustellen, werden bevorzugt Fittings verwendet. Dabei müssen zur Gewährleistung von einer dauerhaft dichten Verbindung allerdings strenge Anforderungen an die Verbindung erfüllt werden. Ist das von den Rohren geführte Medium ein Gas, muss die Verbindung einem Druck von bis zu 10 bar bei Temperaturwechseln von -20 bis +60 °C über mehrere Tage standhalten. Ist das geführte Medium Wasser, muss die Verbindung Temperaturwechseln von Raumtemperatur oder kaltem Wasser bis zu 95 °C standhalten und zudem möglichst korrosionsresistent sein.

Während über lange Zeit als Material für die Rohre und zu verbindenden Bauteile Metall verwendet wurde, werden diese mittlerweile auch regelmäßig zumindest teilweise aus Kunststoff hergestellt. Insbesondere kommen häufig Kunststoff aufweisende Rohre in Form von Verbundrohren oder Mehrschichtverbundrohren zum Einsatz. Dadurch ergeben sich allerdings Probleme bei der Verbindung der ebenfalls den Kunststoff aufweisenden rohrförmigen Enden mit weiterhin aus Metall hergestellten Fittings.

Der verwendete Kunststoff der rohrförmigen Enden weist in der Regel eine höhere Elastizität auf als das aus Metall hergestellte Fitting. Findet also beispielsweise eine Verformung statt, kann der Kunststoff wieder in seine ursprüngliche Lage zurückkehren, während das Metall die Verformung nicht mitmachen kann oder dadurch irreversibel verformt sein kann. Dadurch ist es mit einem Metallfitting aufgrund der Elastizität des Kunststoff aufweisenden rohrförmigen Endes nicht ohne weiteres möglich, eine dauerhaft dichte Verbindung zwischen dem Fitting und dem rohrförmigen Ende herzustellen.

Dieses Problem wird im Stand der Technik durch die Verwendung von sogenannten Dichtelementen, beispielsweise 0-Ringen, gelöst. Dazu wird zwischen der Außenumfangsfläche des Fittings und der Innenumfangsfläche des rohrförmigen Endes (innen abdichtend) oder aber zwischen der Innenumfangsfläche des Fittings und der Außenumfangsfläche des rohrförmigen Endes (außen abdichtend) ein Dichtelement positioniert. Die Elastizität des Dichtelements kann die fehlende Elastizität des Metallfittings ausgleichen.

Problematisch ist hierbei allerdings zum einen, dass aufgrund des zusätzlich vorzusehenden Dichtelements eine erhöhte Sorgfalt bei der Installation oder Montage nötig ist, damit das Dichtelement beispielsweise nicht verrutscht. Es kann bei der Verwendung von solchen Dichtelementen zu unbeabsichtigten Undichtigkeiten kommen.

Zum anderen müssen für die Verwendung der Fittings für Gas führende Bauteile einerseits und für Wasser führende Bauteile andererseits aufgrund der unterschiedlichen Auswirkungen des Mediums auf die elastischen Dichtelemente jeweils unterschiedliche Dichtelemente oder sogar unterschiedliche Fittings vorgesehen werden. Dies führt zu weiteren Nachteilen wie einer aufwendigeren Produktion und einer geforderten höheren Sorgfalt bei der Montage aufgrund der Notwendigkeit von unterschiedlichen Dichtelementen oder Fittings in Abhängigkeit vom geführten Medium.

Ebenfalls ist es aus dem Stand der Technik bekannt, bei innen abdichtenden Fittings das einen Kunststoff aufweisende rohrförmige Ende zunächst aufzuweiten und dann durch Aufschieben auf das Fitting mit dem Fitting zu verbinden. Durch eine radial nach innen wirkende Rückstellkraft des rohrförmigen Endes kann so eine ausreichende Dichtigkeit zu dem Fitting erreicht werden. Nachteilig hierbei ist allerdings, dass zum einen mit dem Aufweiten des rohrförmigen Endes ein zusätzlicher Installationsschritt notwendig ist und dass zum anderen das Material des rohrförmigen Endes durch den Aufweitungsprozess stark beansprucht wird, was insbesondere bei Verbund- oder Mehrschichtverbundrohren zum Ablösen von Schichten führen kann.

Ebenfalls ist es denkbar, auf ein Fitting aus Metall zu verzichten und stattdessen ein Vollkunststofffitting zu verwenden. Allerdings ist die Akzeptanz solcher Fittings im Markt nicht ausreichend, um Metallfittings ersetzen zu können. Zudem können Metallfittings der Verbindung eine erhöhte Stabilität verleihen.

Aus der US 3,951,438 A ist ein Fitting bekannt, bei welchem eine Kunststoffschicht auf einen profilierten Stützabschnitt aus Metall gebracht wird. Die Kunststoffschicht kann dabei durch eine Beschichtung des Stützkörpers oder eine verpresste Kunststoffhülse gebildet werden.

Aus der DE 196 07 630 C1 ist ein Pressfitting bekannt, das einen metallischen Fittingkörper und ein aus Kunststoff bestehendes Abdichtelement aufweist. Der Fittingkörper weist eine umlaufende Vertiefung auf, in die das Abdichtelement beim Verpressen eingedrückt wird.

Hiervon ausgehend liegt der vorliegenden Erfindung die technische Aufgabe zugrunde, ein Fitting anzugeben, welches eine ausreichende Abdichtung zu einem rohrförmigen Ende ermöglicht, wobei aber gleichzeitig die vorgenannten Probleme vermieden werden. Darüber hinaus soll ein System und eine dichte Verbindung mit einem solchen Fitting angegeben werden.

Gemäß einer ersten Lehre der vorliegenden Erfindung wird die Aufgabe durch ein Fitting zum dichten Verbinden an einem rohrförmigen Ende, insbesondere eines Rohres, mit einem äußeren rohrförmigen Fittingkörper und mit einem inneren rohrförmigen Fittingkörper gelöst, wobei der äußere Fittingkörper einen zumindest teilweise aus Kunststoff bestehenden äußeren Stützabschnitt zum Einführen in das rohrförmige Ende aufweist, wobei der innere Fittingkörper einen zumindest teilweise aus Metall bestehenden inneren Stützabschnitt zum Einführen in das rohrförmige Ende aufweist, wobei der innere Stützabschnitt zumindest teilweise innerhalb des äußeren Stützabschnitts angeordnet ist, wobei die Innenumfangsfläche des äußeren Stützabschnitts und die Außenumfangsfläche des inneren Stützabschnitts bereichsweise gegeneinander abgedichtet sind und wobei zwischen der Innenumfangsfläche des äußeren Stützabschnitts, der Außenumfangsfläche des inneren Stützabschnitts mindestens ein Hohlraum gebildet ist und auf der Außenumfangsfläche des äußeren Stützabschnitts mindestens eine radial auswärtige Erhöhung, insbesondere in Form einer Profilierung, vorgesehen ist, welche zumindest teilweise im Bereich des mindestens einen Hohlraums angeordnet ist

Unter einem Stützabschnitt wird dabei der Abschnitt des jeweiligen Fittingkörpers verstanden, welcher in das rohrförmige Ende eingeschoben werden kann und somit das rohrförmige Ende von innen Stützen kann. Insofern stellt der Stützabschnitt einen Innenstützabschnitt oder Innenstützkörper dar. Die Fittingkörper können dabei aber insbesondere noch weitere Abschnitte aufweisen, welche sich an die Stützabschnitte anschließen, beispielsweise Übergangs- oder Grundabschnitte, aber auch weitere Stützabschnitte, welche der Verbindung mit weiteren Bauteile dienen können.

Erfindungsgemäß wird erreicht, dass sich ein zumindest teilweise aus Kunststoff bestehender Stützabschnitt mit einem zumindest teilweise aus Metall bestehenden Stützabschnitt zumindest abschnittsweise in radialer Richtung gesehen überlappt, da der innere Stützabschnitt zumindest teilweise innerhalb des äußeren Stützabschnitts angeordnet ist. Diese Stützabschnitte sind dann in das rohrförmige Ende einschiebbar. Vorzugsweise ist der innere Stützabschnitt dabei im Wesentlichen koaxial innerhalb des äußeren Stützabschnitts angeordnet.

Dadurch, dass die Innenumfangsfläche des äußeren Stützabschnitts mit der Außenumfangsfläche des inneren Stützabschnitts bereichsweise gegeneinander abgedichtet ist, wird verhindert, dass zwischen der Innenumfangsfläche des äußeren Stützabschnitts und der Außenumfangsfläche des inneren Stützabschnitts das geführte Medium, also insbesondere sowohl Gas als auch Wasser, austreten kann.

Die Abdichtung des Fittings gegenüber dem rohrförmigen Ende kann dann zwischen der Innenumfangsfläche des rohrförmigen Endes und der Außenumfangsfläche des äußeren Stützabschnitts erfolgen.

Dadurch, dass zwischen der Innenumfangsfläche des äußeren Stützabschnitts und der Außenumfangsfläche des inneren Stützabschnitts mindestens ein Hohlraum gebildet ist, wird erreicht, dass trotz der Verwendung eines Fittingkörpers aus Metall eine dichte Verbindung mit einem rohrförmigen Ende erzielt werden kann, auch wenn das rohrförmige Ende zumindest teilweise aus einem Material besteht, welches eine Elastizität bzw. Rückfederung aufweist, welche mit einem Metallfitting bisher nicht ohne Weiteres abgedichtet werden konnte. Da der mindestens eine Hohlraum für den äußeren Stützabschnitt radial einwärts Raum zum Ausweichen bereitstellt, wird durch den mindestens einen Hohlraum die Elastizität des äußeren zumindest teilweise aus Kunststoff bestehenden Stützabschnitts derart modifiziert, dass dieser eventuelle Rückfederungen des rohrförmigen Endes ausgleichen kann und so die Dichtigkeit zwischen der Innenumfangsfläche des rohrförmigen Endes und der Außenumfangsfläche des äußeren Stützabschnitts erhalten bleibt. Die Elastizität des äußeren Stützabschnitts kann dabei insbesondere durch Biegekräfte einerseits und durch die Ringspannung des Kunststoffs des äußeren Stützabschnitts andererseits erzielt werden.

Mit anderen Worten wird dem äußeren Stützabschnitt so die Möglichkeit gegeben, radial nach innen nachzugeben und eine zur Abdichtung ausreichende Rückstellkraft radial nach außen bereitzustellen. Auf diese Weise kann ein Fitting mit einem zumindest teilweise aus einem Metall bestehenden Fittingkörper verwendet werden, wobei aber gleichzeitig das Abdichtverhalten eines Vollkunststofffittings nachgebildet werden kann.

Im Ergebnis kann so ein vom Markt akzeptiertes Fitting, welches zumindest teilweise aus Metall besteht, bereitgestellt werden, welches sich sowohl für Gas- als auch für Wasserleitungen eignet, da insbesondere kein Dichtelement vorgesehen zu sein braucht und zudem kein Aufweiten des rohrförmigen Endes durchgeführt werden muss, sodass eine einfache Installation möglich ist.

Somit eignet sich ein solches Fitting insbesondere zum dichten Verbinden an ein Kunststoff aufweisendes Rohr oder an ein Verbund- oder Mehrschichtverbundrohr, vorzugsweise an ein Kunststoff aufweisendes Verbund- oder Mehrschichtverbundrohr.

Auf der Außenumfangsfläche des äußeren Stützabschnitts ist mindestens eine radial auswärtige Erhöhung, insbesondere in Form einer Profilierung, vorgesehen, welche zumindest teilweise im Bereich des mindestens einen Hohlraums angeordnet ist.

Es hat sich herausgestellt, dass durch die mindestens eine radial auswärtige Erhöhung, beispielsweise in Form einer radial auswärts gerichteten lokalen Verdickung des äußeren Stützabschnitts, bereichsweise eine besonders effektive Abdichtung zwischen der Innenumfangsfläche des rohrförmigen Endes und der Außenumfangsfläche des äußeren Stützabschnitts erreicht werden kann. Die mindestens eine radial auswärtige Erhöhung kann insbesondere auf der Außenumfangsfläche des äußeren Stützabschnitts umlaufend gestaltet sein und/oder in Form einer Zahnung, welche vorzugsweise widerhakenförmig gestaltet ist. Dadurch kann zusätzlich die Gefahr eines unbeabsichtigten Abrutschens oder Herunterrutschens des rohrförmigen Endes vom äußeren Stützabschnitt verringert werden.

Um eine besonders effektive Abdichtung zu erhalten ist vorzugsweise die mindestens eine radial auswärtige Erhöhung nur in den Bereichen auf der Außenumfangsfläche des äußeren Stützabschnitts vorzusehen, in denen die Innenumfangsfläche des äußeren Stützabschnitts und die Außenumfangsfläche des inneren Stützabschnitts nicht bereichsweise gegeneinander abgedichtet sind. Die mindestens eine radial auswärtige Erhöhung auf der Außenumfangsfläche des äußeren Stützabschnitts ist also insbesondere in den Bereichen der Hohlräume vorzusehen. Dadurch werden dem Fitting besonders vorteilhafte Elastizitätseigenschaften zur Abdichtung gegenüber der Innenumfangsfläche des rohrförmigen Endes verliehen. Dies rührt daher, dass so besonderes effektiv die Biegekräfte und die Ringspannungen des Kunststoffs des äußeren Stützabschnitts zur Abdichtung gegen die Innenumfangsfläche des Rohrförmigen Endes mittels der mindestens einen vorgesehenen radial auswärtigen Erhöhung genutzt werden.

Grundsätzlich ist es möglich, dass der Hohlraum mit unterschiedlichen Füllstoffen oder Medien, wie beispielsweise Gasen oder Fasern gefüllt sein kann. Als besonders vorteilhaft hat sich jedoch herausgestellt, wenn mindestens ein Hohlraum zwischen der Innenumfangsfläche des äußeren Stützabschnitts und der Außenumfangsfläche des inneren Stützabschnitts ein mit Luft gefüllter, vorzugsweise ringförmig umlaufender, Hohlraum ist. Mit anderen Worten wird so eine Luftkammer erzeugt, in die der äußere Stützabschnitt reinfedern kann. Es hat sich herausgestellt, dass ein mit Luft gefüllter Hohlraum dem äußeren Stützabschnitt des äußeren Fittingkörpers des Fittings vorteilhafte Eigenschaften in Bezug auf die Elastizität und die Rückstellkräfte verleiht, sodass eine effektive Abdichtung insbesondere von rohrförmigen Enden von Kunststoff aufweisenden Rohren erreicht wird.

Der mindestens eine Hohlraum ist vorzugsweise ein gegenüber dem geführten Medium und/oder gegenüber der Umgebung abgedichteter Hohlraum. Durch entsprechende Anordnung der Bereiche, in denen die Innenumfangsfläche des äußeren Stützabschnitts und die Außenumfangsfläche des inneren Stützabschnitts gegeneinander abgedichtet sind, kann dies erreicht werden.

Ist gemäß einer weiteren Ausgestaltung mindestens ein Hohlraum zwischen der Innenumfangsfläche des äußeren Stützabschnitts und der Außenumfangsfläche des inneren Stützabschnitts durch mindestens eine Aussparung auf der Außenumfangsfläche des inneren Stützabschnitts und/oder der Innenumfangsfläche des äußeren Stützabschnitts gebildet, kann die Bildung des mindestens einen Hohlraums besonders einfach realisiert werden. Die Aussparungen können beispielsweise durch Querschnittsverringerungen des inneren Stützabschnitts des inneren Fittingkörpers bereitgestellt werden.

Grundsätzlich kann die bereichsweise Abdichtung der Innenumfangsfläche des äußeren Stützabschnitts gegenüber der Außenumfangsfläche des inneren Stützabschnitts unterschiedlich, beispielsweise mittels Verkleben, Verschrauben oder Verrasten, erfolgen. Besonders vorteilhaft sind die Innenumfangsfläche des äußeren Stützabschnitts und die Außenumfangsfläche des inneren Stützabschnitts gemäß einer weiteren Ausgestaltung des erfindungsgemäßen Fittings allerdings mittels einer kraftschlüssigen Verbindung, insbesondere einer Presspassung, bereichsweise gegeneinander abgedichtet. Durch die kraftschlüssige Verbindung kann auf einfache Weise eine zuverlässig dichte Verbindung zwischen der Innenumfangsfläche des äußeren Stützabschnitts und der Außenumfangsfläche des inneren Stützabschnitts bereitgestellt werden. Ist bereichsweise eine Presspassung vorgesehen, besitzt in diesen Bereichen die Außenumfangsfläche des inneren Stützabschnitts ein Übermaß im Vergleich zur Innenumfangsfläche des äußeren Stützabschnitts. Eine solche Presspassung kann dadurch realisiert werden, dass der äußere Fittingkörper zumindest im Bereich des äußeren Stützabschnitts aufgeweitet wird und auf den inneren Fittingkörper aufgeschoben wird. Durch die durch den Memoryeffekt verursachte radiale Kontraktion des äußeren Fittingkörpers im aufgeweiteten Bereich wird dann eine effektive Press- oder Übermaßpassung realisiert.

Besonders bevorzugt ist das erfindungsgemäße Fitting dichtringfrei, insbesondere dichtelementfrei, ausgebildet. Es wurde erkannt, dass auch ohne zusätzliche Dichtringe bzw. Dichtelemente eine dauerhaft dichte Verbindung realisiert werden kann. Dadurch müssen insbesondere auch keine unterschiedlichen Dichtelemente oder Fittings in Abhängigkeit des geführten Mediums vorgesehen werden.

Gemäß einer nächsten Ausgestaltung des erfindungsgemäßen Fittings, ragt das dem rohrförmigen Ende zugewandte Ende des äußeren Stützabschnitts über das dem rohrförmigen Ende zugewandte Ende des inneren Stützabschnitts in axialer Richtung hinaus. Dabei werden unter den dem rohrförmigen Ende zugewandeten Enden der Stützabschnitte die Enden der Stützabschnitte verstanden, welche in das rohrförmige Ende eingeführt werden. Dadurch kann insbesondere ein nach innen frei federnder Bereich an dem dem rohrförmigen Ende zugewandten Ende des äußeren Stützabschnitts vorgesehen werden. In diesem Bereich kann insbesondere eine erhöhte Wandstärke des äußeren Stützabschnitts vorgesehen sein, sodass in diesem Bereich der äußere Stützabschnitt praktisch einem Stützabschnitt eines Vollkunststofffittings entspricht. So können vorteilhafte Dichtungseigenschaften eines Vollkunststoffstützabschnitts mit dem erfindungsgemäßen Fitting kombiniert werden. Ebenfalls kann dadurch ein in axialer Richtung gesehen kürzerer innerer Stützabschnitt oder Stützabschnitt vorgesehen werden oder dieser braucht nicht so weit in den äußeren Stützabschnitt eingeführt zu werden.

Ragt das dem rohrförmigen Ende abgewandte Ende des inneren Fittingkörpers über das dem rohrförmigen Ende abgewandte Ende des äußeren Fittingkörpers in axialer Richtung hinaus, können an den inneren Fittingkörper auf beliebige Art und Weise weitere Bauteile, wie Fittings, Rohre oder Armaturen, angeschlossen werden. Da der innere Fittingkörper insbesondere vollständig aus Metall hergestellt sein kann, können hier mittels aus dem Stand der Technik bekannter Methoden weitere Bauteile angeschlossen werden, beispielsweise durch Verpressen. Ebenfalls ist denkbar, das dem rohrförmigen Ende abgewandte Ende des inneren Fittingkörpers ebenfalls als inneren Stützabschnitt vorzusehen und für ein erfindungsgemäßes Fitting zu verwenden.

Vorzugsweise besteht der innere Fittingkörper, insbesondere der innere Stützabschnitt, zumindest teilweise aus Kupfer, Messing, Aluminium und/oder Stahl, insbesondere ferritischem oder austenitischem Edelstahl. Ebenfalls kann eine Legierung oder Kombination davon vorgesehen sein. Besonders bevorzugt ist allerdings, wenn der innere Fittingkörper aus Kupfer oder einer Kupferlegierung hergestellt ist. Dadurch können ein vorteilhaftes Migrationsverhalten, eine gute Korrosionsbeständigkeit, eine gute Festigkeit und eine gute Bearbeitbarkeit, insbesondere Zerspanbarkeit, sowie vorteilhafte Gusseigenschaften kombiniert werden.

Vorzugsweise besteht der äußere Fittingkörper, insbesondere der äußere Stützabschnitt, zumindest teilweise aus Polyphenylsulfon (PPSU), Polyvenylidenfluorid (PVDF), unvernetztem Polyethylen (PE-RT), vernetztem Polyethylen (PE-Xa, PE-Xb, PE-Xc), Polybuten und/oder Polypropylen. Besonders bevorzugt ist allerdings, wenn der äußere Fittingkörper aus Polyphenylsulfon (PPSU) hergestellt ist. Die Verwendung eines solchen Kunststoffs hat den Vorteil, dass das Fitting auch für Rohrleitungen, durch welche Trinkwasser geführt wird, geeignet ist.

Die eingangs genannte Aufgabe wird zudem gemäß einer weiteren Lehre der Erfindung durch ein System mit einem erfindungemäßen Fitting und mit einer Außenhülse gelöst, wobei zwischen der Innenumfangsfläche der Außenhülse und der Außenumfangsfläche des äußeren Stützabschnitts eine ringförmig umlaufende Aufnahme für das zu verbindende rohrförmige Ende gebildet wird.

Durch das Vorsehen einer Außenhülse in dem erfindungsgemäßen System kann eine radial einwärtige Kraft auf das rohrförmige Ende im Bereich des inneren bzw. äußeren Stützabschnitts ausgeübt werden. Dadurch kann mit dem erfindungsgemäßen System auf einfache Weise eine besonders dauerhaft dichte Verbindung erreicht werden.

Die Außenhülse kann beispielsweise im Wesentlichen zylindrisch sein und im Wesentlichen koaxial mit dem inneren bzw. äußeren Fittingkörper angeordnet sein.

Auch kann die Außenhülse beispielsweise mehrteilig, insbesondere zweiteilig ausgebildet sein. Beispielsweise kann die Außenhülse eine Überwurfmutter und einen Klemmkörper umfassen.

Die Außenhülse kann dabei auf ihrer Innenumfangsfläche auch einen oder mehrere radial einwärtige Vorsprünge aufweisen, um eine Fixierung gegenüber dem einzuschiebenden rohrförmigen Ende zu erzielen. Auch kann die Hülse eine oder mehrere Aussparungen aufweisen, um die richtige Positionierung insbesondere des eingeschobenen rohrförmigen Endes überprüfen zu können.

Weiterhin kann der innere oder der äußere Fittingkörper einen Anschlag, beispielsweise in Form eines Flansches, zur axialen Positionierung der Außenhülse aufweisen. Ein solcher Anschlag kann auch als separates Teil ausgebildet sein, welcher mit dem inneren oder dem äußeren Fittingkörper verbunden, beispielsweise verrastet, ist.

Eine Ausgestaltung des erfindungsgemäßen Systems ist dadurch gekennzeichnet, dass die Außenhülse direkt oder indirekt mit dem inneren und/oder mit dem äußeren Fittingkörper, insbesondere mit einem sich an den äußeren Stützabschnitt anschließenden Grundabschnitt des äußeren Fittingkörpers, verbunden ist.

Die Außenhülse kann direkt mit dem inneren oder mit dem äußeren Fittingkörper verbunden werden, indem die Außenhülse mit der Außenumfangsfläche des inneren oder des äußeren Fittingkörpers kraftschlüssig, formschlüssig oder materialschlüssig verbunden ist, beispielsweise verrastet, verklebt oder verschraubt ist. Entsprechende Verbindungsmittel können insbesondere auf der Außenumfangsfläche des Grundabschnitts oder Flanschabschnitts des äußeren Fittingkörpers vorgesehen sein. Gemäß einer weiteren Lehre der erfindungsgemäßen Verbindung wird die Aufgabe auch durch eine dichte Verbindung mit einem erfindungsgemäßen Fitting und mit einem rohrförmigen Ende gelöst, wobei das rohrförmige Ende auf dem äußeren Stützabschnitt des äußeren Fittingkörpers positioniert ist.

Dadurch kann die Innenumfangsfläche des äußeren Rohres zumindest bereichsweise durch die Außenumfangsfläche des äußeren Stützabschnitts des erfindungsgemäßen Fittings abgedichtet werden, insbesondere durch mindestens eine radial auswärtige Erhöhung auf der Außenumfangsfläche des äußeren Stützabschnitts.

Insbesondere muss das rohrförmige Ende nicht aufgeweitet werden, bevor es auf den äußeren Stützabschnitt des äußeren Fittingkörpers aufgeschoben wird, da durch das erfindungsgemäße Fitting eine ausreichende Abdichtung erzielt werden kann, ohne dass Rückstellkräfte beispielsweise eines zuvor aufgeweiteten und einen Kunststoff aufweisenden rohrförmigen Endes notwendig sind.

Somit sind insbesondere dichte Verbindungen möglich, wobei das rohrförmige Ende das Ende eines Kunststoff aufweisenden Rohrs oder eines Verbund- oder Mehrschichtverbundrohrs, vorzugsweise eines Kunststoff aufweisenden Verbund- oder Mehrschichtverbundrohres, ist. Diese weisen insbesondere einen Kunststoff als innere Schicht auf.

Das Verbund- oder Mehrschichtverbundrohr kann insbesondere eine oder mehrere Schichten aus Kunststoff und Metall aufweisen. Die folgenden Kunststoffe können dabei eingesetzt werden: vernetztes Polyethylen (PE-Xa, PE-Xb, PE-Xc), Polyvenylidenfluorid (PVDF), unvernetztes Polyethylen (PE-RT),, Polybuten und/oder Polypropylen vorzusehen. Als innere Schicht wird dabei bevorzugt vernetztes Polyethylen (PE-Xa, PE-Xb, PE-Xc) eingesetzt.

Allerdings kann das Verbund- oder Mehrschichtverbundrohr auch eine oder mehrere innen liegende Schichten aus Metall aufweisen, insbesondere aus Kupfer, Messing, Aluminium und/oder Stahl, insbesondere ferritischem oder austenitischem Edelstahl, bzw. einer Legierung oder Kombination davon.

Es gibt nun eine Vielzahl von Möglichkeiten die Erfindung auszugestalten und weiterzubilden. Hierzu wird einerseits auf die den unabhängigen Patentansprüchen nachgeordneten Patentansprüche verwiesen, zusätzlich soll die Erfindung anhand der folgenden Ausführungsbeispiele näher erläutert werden. Es wird auf die beigefügte Zeichnung Bezug genommen.

### In der Zeichnung zeigen

Fig. 1 ein erstes Ausführungsbeispiel eines erfindungsgemäßen Systems mit einem ersten Ausführungsbeispiel eines erfindungsgemäßen Fittings und einer Außenhülse im Längsschnitt;
Fig. 2 ein zweites Ausführungsbeispiel eines erfindungsgemäßen Systems mit einem zweiten Ausführungsbeispiel eines erfindungsgemäßen Fittings und einer Außenhülse in Kombination mit einem weiteren Fittingsystem im Längsschnitt;
Fig. 3 ein drittes Ausführungsbeispiel eines erfindungsgemäßen Systems mit einem dritten Ausführungsbeispiel eines erfindungsgemäßen Fittings und einer eine Überwurfmutter aufweisenden Außenhülse im Längsschnitt.

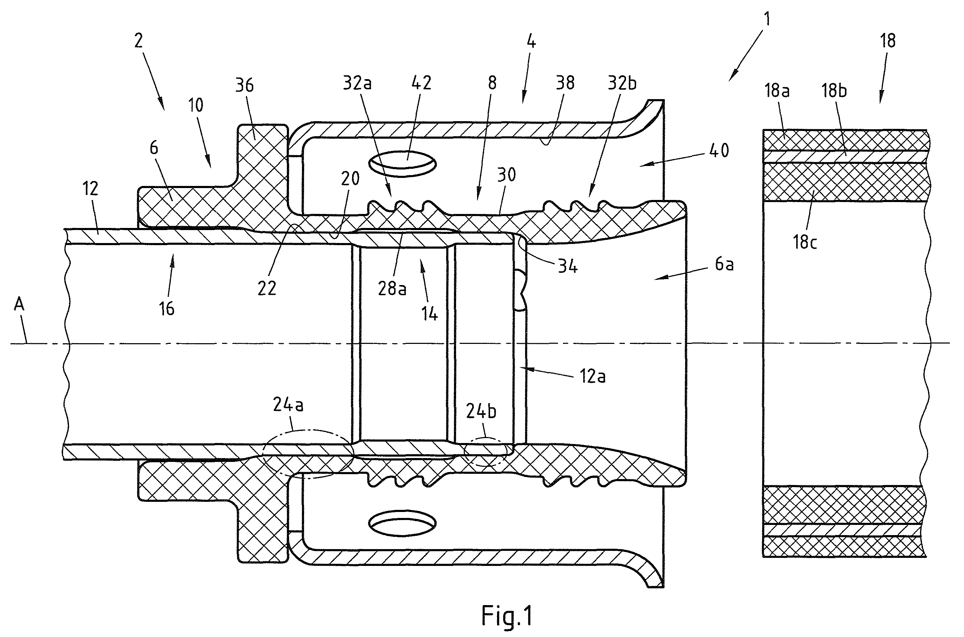

Fig. 1 zeigt ein erstes Ausführungsbeispiel eines erfindungsgemäßen Systems 1 mit einem ersten Ausführungsbeispiel eines erfindungsgemäßen Fittings 2 und einer Außenhülse 4 im Längsschnitt. Das Fitting 2 umfasst einen äußeren rohrförmigen Fittingkörper 6, welcher einen äußeren Stütztabschnitt 8 und einen Grundabschnitt 10 aufweist. Das Fitting 2 umfasst weiterhin einen inneren rohrförmigen Fittingkörper 12, welcher einen inneren Stütztabschnitt 14 und einen Grundabschnitt 16 aufweist. Der äußere Fittingkörper 6 besteht in diesem Fall vollständig aus PPSU, wobei aber auch andere Kunststoffe zum Einsatz kommen können. Der innere

Fittingkörper 12 besteht in diesem Fall vollständig aus Kupfer, wobei aber auch hier andere Metalle zum Einsatz kommen können.

Die Fittingkörper 6, 12 sind mit ihren einem rohrförmigen Ende 18 zugewandten Enden 6a, 12a in das rohrförmige Ende einführbar. Dabei sind im Gegensatz zu den Grundkörpern 10, 16 nur die Stützabschnitte 8,14 in das rohrförmiges Ende 18 einführbar. Das rohrförmige Ende ist in diesem Beispiel das eines Mehrschichtverbundrohrs mit drei Schichten 18a, 18b, 18c. Insbesondere sind die innere Schicht 18c aus vernetztem Polyethylen (PE-Xa, PE-Xb, PE-Xc), die mittlere Schicht 18b aus Aluminium und die äußere Schicht 18a aus herkömmlichen Polyethylen (PE) als Schutzschicht hergestellt,.

Der innere Fittingkörper 12 ist im Wesentlichen koaxial innerhalb des äußeren Fittingkörpers 6 angeordnet, so dass auch der innere Stützabschnitt 14 im Wesentlichen koaxial innerhalb des äußeren Stützabschnitts 6 entlang der gemeinsamen Längsachse A angeordnet ist. Der innere Fittingkörper 12 ist dabei teilweise mit Übermaß in den äußeren Fittingkörper 6 eingeführt. Dadurch ergibt sich insbesondere im Bereich der Bereiche 24a und 24b abschnittsweise eine kraftschlüssige Verbindung in Form einer Presspassung zwischen der Innenumfangsfläche 20 des äußeren Stützabschnitts 6 und der Außenumfangsfläche 22 des inneren Stützabschnitts 12. Dadurch sind die Innenumfangfläche 20 des äußeren Stützabschnitts 6 und die Außenumfangsfläche 22 des inneren Stützabschnitts 12 bereichsweise, vorliegend in den Bereichen 24a und 24b gegeneinander abgedichtet.

Zwischen den so abgedichteten Bereichen 24a, 24b zwischen innerem und äußerem Fittingkörper 6, 12 ist ein Hohlraum 28a zwischen der Innenumfangsfläche 20 des äußeren Stützabschnitts 6 und der Außenumfangsfläche 22 des inneren Stützabschnitts 12 gebildet. Der hier ringförmig umlaufende Hohlraum 28a wird durch eine ebenfalls ringförmig umlaufende Aussparung in der Innenumfangsfläche 20 des äußeren Stützabschnitts 8 erzeugt. Der Hohlraum 28a ist mit Luft gefüllt und besitzt in längsaxialer Richtung eine längliche Ausdehnung. Aufgrund der abgedichteten Bereiche 24a, 24b ist der dazwischen liegende Hohlraum 28a gegenüber der Umgebung und gegenüber dem Leitungsinneren abgedichtet.

Im Bereich des Hohlraums 28a ist auf der Außenumfangsfläche 30 des äußeren Stützabschnitts 8 eine radial auswärtige Erhöhung in Form einer Zahnung 32a vorgesehen. Die Zahnung 32a ist widerhakenförmig ausgestaltet, sodass ein Herabgleiten des rohrförmigen Endes 18 vermieden wird. Die Zahnung bewirkt eine effektive Abdichtung mit der Innenumfangsfläche des eingeführten rohrförmigen Endes 18. Dadurch, dass die radial auswärtige Erhöhung 32a im Bereich des Hohlraums 28a vorgesehen ist, kann der äußere Stützabschnitt 8 in diesem Bereich in den Hohlraum 28a ausweichen. Durch die Ringkräfte und die Biegekräfte kann die Zahnung 32, nachdem das rohrförmige Ende 18 auf den äußeren Stützabschnitt 8 aufgeschoben und über die Zahnung 32a herübergeschoben wurde, dicht gegen das rohrförmige Ende 18 abdichten. Eventuelle Rückfederungen des rohrförmigen Endes 18 können durch den Hohlraum 28a auch vom äußeren Stützabschnitt 8 mitgemacht werden.

Die Außenumfangsfläche 30 des äußeren Stützabschnitts 8 weist im Bereich des dem rohrförmigen Ende 18 zugewandten Endes 6a des Fittingkörpers 6 eine weitere radial auswärtige Erhöhung in Form einer Zahnung 32b auf. Die Zahnung 32b ist im Wesentlichen wie die Zahnung 32a ausgebildet, wobei aber auch unterschiedliche Ausgestaltungen gewählt werden können. Da das dem rohrförmigen Ende 18 zugewandte Ende 6a des äußeren Stützabschnitts 8 über das dem rohrförmigen Ende 18 zugewandte Ende 12a des inneren Stützabschnitts 14 in axialer Richtung hinausragt, überlappen der äußere Stützabschnitt 8 und der innere Stützabschnitt 14 in radialer Richtung hier nicht, sodass im Bereich der weiteren Zahnung 32b ein nach innen frei federnder Bereich an dem dem rohrförmigen Ende 18 zugewandten Ende 6a des äußeren Stützabschnitts 8 gebildet ist. In diesem Bereich kann der äußere Stützabschnitt 8 das rohrförmige Ende 18 wie ein Vollkunststofffitting abdichten. Die Wanddicke des äußeren Stützabschnitts 8 ist in diesem Bereich zumindest teilweise gegenüber der des übrigen äußeren Stützabschnitts 8 erhöht. Dadurch wird für den inneren Fittingkörper 12 zudem ein Anschlag 34 in axialer Richtung auf der Innenumfangsfläche des äußeren Stützabschnitts gebildet.

Der äußere Fittingkörper 6 weist an seinem Grundabschnitt 10 einen sich radial auswärtig erstreckenden Flanschabschnitt 36 auf. Dieser dient als Anschlag in axialer Richtung für die Außenhülse 4. Zudem kann der Flanschabschnitt 36 die Handhabbarkeit bei der Montage, insbesondere beim Aufschieben des rohrförmigen Endes 18 erleichtern.

Die Außenhülse 4 ist im Wesentlichen zylindrisch gestaltet und im Wesentlichen koaxial mit den Fittingkörpern 6, 12 bzw. der Achse A angeordnet. Die Außenhülse besteht in diesem Ausführungsbeispiel aus Metall, allerdings können alternativ auch andere Materialien wie Kunststoff verwendet werden. Zwischen der Innenumfangsfläche 38 der Außenhülse 4 und der Außenumfangsfläche 30 des äußeren Stützabschnitts 6 ist eine ringförmig umlaufende Aufnahme 40 gebildet. In die Aufnahme 40 wird das rohrförmige Ende 18 zum Herstellen einer dichten Verbindung eingeführt. Um das Einführen des rohrförmigen Endes 18 zu erleichtern, ist die Außenhülse 4 an ihrem dem rohrförmigen Ende 18 zugewandten Ende radial auswärts gebogen. Hingegen ist die Außenhülse an ihrem dem rohrförmigen Ende 18 abgewandten Ende radial einwärts gebogen, um eine Kontaktfläche mit dem Flanschabschnitt 36 bereitzustellen. Die Außenhülse 4 weist weiterhin Aussparungen 42 auf, um die Positionierung des rohrförmigen Endes 18 zu kontrollieren. Durch das Vorsehen der Außenhülse 4 kann eine radial einwärtige Kraft in eingeschobenem Zustand auf das rohrförmige Ende 18 im Bereich des inneren bzw. äußeren Stützabschnitts 8, 14 ausgeübt werden.

Das dem rohrförmigen Ende 18 abgewandte Ende des inneren Fittingkörpers 12 ragt über das dem rohrförmigen Ende abgewandten Ende des äußeren Fittingkörpers 6 in axialer Richtung hinaus. Der sich an den inneren Stützabschnitt 14 anschließende Grundabschnitt 16 des inneren Fittingkörpers 12 kann sich dabei im Wesentlichen zylindrisch fortsetzen. Es können allerdings beliebige Ausgestaltungen an dem dem rohrförmigen Ende 18 abgewandten Ende des inneren Fittingkörpers 12 vorgesehen sein. Insbesondere kann der innere Fittingkörper 12 derart gestaltet sein, dass hieran weitere Bauteile wie Fittingkörper oder Fittings angeschlossen werden können.

Wie aus Fig. 1 ersichtlich ist, wird zur dichten Verbindung des rohrförmigen Endes 18 des PEX aufweisenden Mehrschichtverbundrohres kein Dichtring oder Dichtelement benötigt. Trotzdem kann das rohrförmige Ende 18, ohne aufgeweitet zu werden, auf das einen inneren Fittingkörper 12 aus Metall aufweisende Fitting 2 aufgeschoben werden und so eine dichte Verbindung in den Abschnitten 32a und 32b hergestellt werden. Daher kann das Fitting insbesondere sowohl für Gas- als auch für Wasser- bzw. Trinkwasserleitungen verwendet werden.

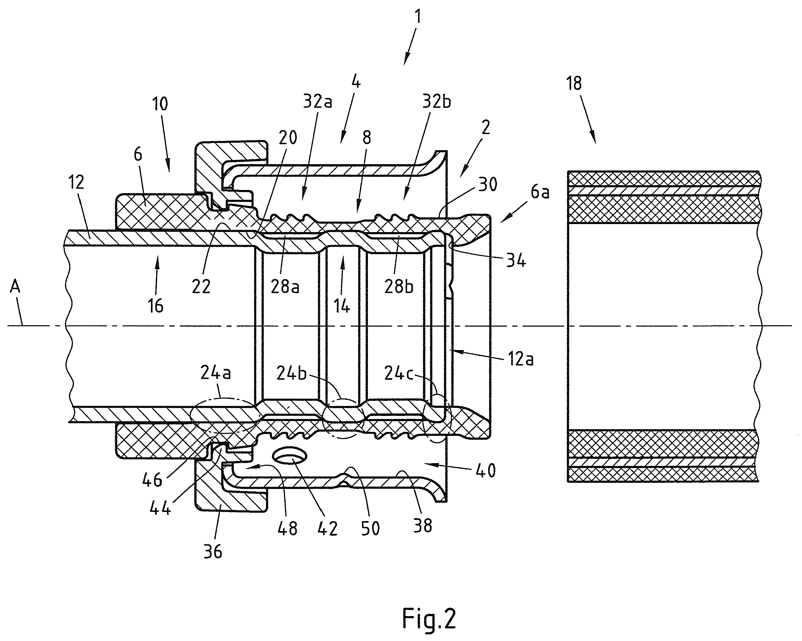

Fig. 2 zeigt ein zweites Ausführungsbeispiel eines erfindungsgemäßen Systems 1 mit einem zweiten Ausführungsbeispiel eines erfindungsgemäßen Fittings 2 und einer Außenhülse 4 in Kombination mit einem weiteren Fittingsystem 1' im Längsschnitt.

Da das System 1 in Fig. 2 ähnlich zu dem aus Fig. 1 ist, werden sich entsprechende Teile des zweiten Ausführungsbeispiels des Systems 1 mit identischen Bezugszeichen versehen.

In Fig. 2 ist zudem dargestellt, wie das Fitting 2 linksseitig mit einem weiteren, nicht gemäß der zuvor beschriebenen Erfindung ausgebildeten Fittingsystem 1' verbunden ist. Dieses ist aber ebenfalls ähnlich zu dem System 1 aufgebaut. Hier werden sich entsprechende Teile mit gestrichenen Bezugszeichen versehen.

Im Unterschied zum im Fig. 1 dargestellten Fitting 2, weist das in Fig. 2 dargestellte Fitting 2 einen sich in axialer Richtung länger erstreckenden inneren Stützabschnitt 14 auf. Dadurch überlappen sich der innere Stützabschnitt 14 und der äußere Stützabschnitt 8 in radialer Richtung auch noch im Bereich der weiteren radial auswärtige Erhöhung in Form der Zahnung 32b. Um eine ähnliche Elastizität im Bereich der Zahnung 32b verglichen mit dem nach innen frei federnder Bereich an dem dem rohrförmigen Ende 18 zugewandten Ende 6a des äußeren Stützabschnitts 8, wie er in Fig. 1 gezeigt ist, zu ermöglichen, ist wie im Bereich der Erhöhung 32a auch im Bereich der Erhöhung 32b ein Hohlraum 28b vorgesehen. Im Vergleich zu dem in Fig. 1 dargestellten Fitting, werden die Hohlräume 28a, 28b dadurch erzeugt, dass Aussparungen auf der Außenumfangsfläche 22 des inneren Stützabschnitts 14 vorgesehen sind. Allerdings ragt auch in diesem Ausführungsbeispiel das dem rohrförmigen Ende 18 zugewandte Ende 6a des äußeren Stützabschnitts 8 über das dem rohrförmigen Ende 18 zugewandte Ende 12a des inneren Stützabschnitts 14 in axialer Richtung hinaus. Somit ergeben sich insgesamt 3 Bereiche 24a, 24b, 24c in denen der äußere Stützabschnitt 8 gegenüber dem inneren Stützabschnitt 14 mittels einer Presspassung abgedichtet ist. Zwischen den Bereichen 24a, 24b, 24c liegen die Hohlräume 28a, 28b. Es kann allerdings auch eine andere Anordnung dieser Bereich gewählt werden. Insbesondere kann eine andere Anzahl an Hohlräumen 28a, 28b und abdichtenden Bereichen 24a, 24b, 24c gewählt werden.

Ein weiterer Unterschied besteht darin, dass der Flanschabschnitt 36 als vom Grundabschnitt 10 des äußeren Fittingkörpers separates Teil vorgesehen ist. Der Flanschabschnitt 36 besteht aus dem gleichen Material wie der äußere Fittingkörper 6, wobei aber auch andere Materialien verwendet werden können. Der Flanschabschnitt 36 weist einen Rastvorsprung 44 auf, während der Grundabschnitt 10 eine entsprechende Rastvertiefung 46 auf der Außenumfangsfläche aufweist, um eine axiale Fixierung des Flanschabschnitts 36 gegenüber dem äußere Fittingkörper 6 zu erreichen. Der Flanschabschnitt 36 weist zudem eine Aussparung 48 zur Aufnahme des dem rohrförmigen Ende 18 abgewandten Endes der Außenhülse 4 auf.

Im Unterschied zu der in Fig. 1 dargestellten Außenhülse, weist die in Fig. 2 gezeigt Außenhülse 4 außerdem einen Fixiervorsprung 50 zur Fixierung des rohrförmigen Endes 18 auf. Natürlich können auch mehrere solcher Vorsprünge vorgesehen sein. An den Grundabschnitt 16 des inneren Fittingkörpers 12 schließt sich in Fig. 2 linksseitig gezeichnet ein weiterer innerer Grundabschnitt 16' des inneren Fittingkörpers 12 an. In dem inneren Grundabschnitt 16' erfährt der innere Fittingkörper 12 zwei Querschnittsreduktionen, sodass sich ein äußerer Fittingkörper 6' mit einer Außenhülse 4' mit geringerem Durchmesser im Vergleich zu Fittingkörper 6 und Außenhülse 4 anschließen kann. So kann linksseitig ein rohrförmiges Ende mit geringerem Querschnitt angeschlossen werden. Allerdings ist auch eine symmetrische Ausgestaltung möglich, sodass auch das Fittingsystem 1' erfindungsgemäß ausgestaltet sein kann.

Vorliegend ist das System 1' zwar ähnlich zu dem System 1 aus Fig. 1 bzw. 2 aufgebaut. Allerdings gibt es nur einen äußeren Stützabschnitt 8'. Eine Überlappung in radialer Richtung des äußeren Stützabschnitts 8' mit einem innere Stützabschnitt ist nicht gegeben. Der innere Stützabschnitt 8' fungiert hier als Vollkunststoffstützabschnitt. Entsprechend ist die Wanddicke des inneren Stützabschnitts 8' auch dicker gewählt als die des Stützabschnitts 8. Die dichte Verbindung zwischen dem Grundabschnitt 16' und dem Grundabschnitt 10' des äußeren Fittingkörpers 6' wird wiederum durch eine Presspassung realisiert.

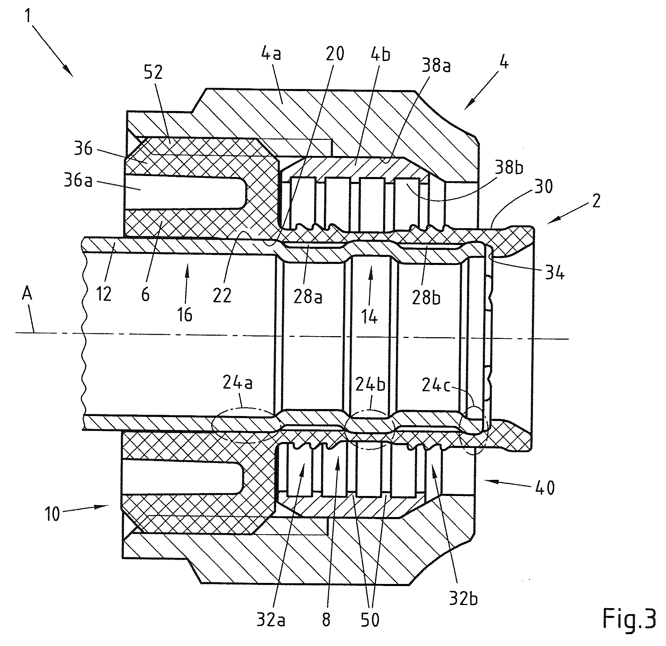

Fig. 3 zeigt ein drittes Ausführungsbeispiel eines erfindungsgemäßen Systems 1 mit einem dritten Ausführungsbeispiel eines erfindungsgemäßen Fittings 2 und einer Außenhülse 4 im Längsschnitt. Das rohrförmige Ende 18 ist nicht dargestellt. Das Fitting 2 ist dem aus Fig. 2 sehr ähnlich. Allerdings unterscheidet sich in Fig. 3 der Flanschbereich 36 des Grundabschnitt 10 des äußeren Stützkörpers 6 von dem in Fig. 2 gezeigten. Der Flanschbereich 38 weist Mittel 52 zur Verbindung zur Außenhülse 4 auf, welche in diesem Ausführungsbeispiel zweiteilig ausgebildet ist und die Überwurfmutter 4a und den Klemmkörper 4b umfasst. Die Überwurfmutter 4a und der Flanschbereich werden hier mittels eines Gewindes 52 verbunden. Dabei ist das Gewinde 52 mit der Aussparung 36a im Flanschabschnitt 36 hinterschnitten. Wird die Überwurfmutter 4a auf das Gewinde 52 des Flanschbereichs aufgeschraubt, wird dadurch der Klemmkörper 4b aufgrund der schräg zur axialen Richtung A gestalteten Innenumfangsfläche 38a der Überwurfmutter 4a und der daran angepassten Außenumfangsfläche des Klemmkörpers 4b im Wesentlichen radial einwärtig gegen die Außenumfangsfläche eines in die ringförmig umlaufende Aufnahme 40 eingeschobenen rohrförmigen Endes 18 gedrückt. Die Innenumfangsfläche des 38b des Klemmkörpers 4b weist dabei eine Profilierung durch die Fixiervorsprünge 50 auf.

Somit kann das in die Aufnahme 40 geschobenes rohrförmige Ende 18 nicht vom Fitting 2 herunterrutschen und gegen die Außenumfangsfläche 30 des äußeren Stützkörpers bzw. gegen vorgesehene radial auswärtige Erhöhungen 32a, 32b gedrückt werden, um eine besonders zuverlässige und dichte Verbindung herzustellen.

## Patentansprüche

1. Fitting zum dichten Verbinden an einem rohrförmigem Ende (18), insbesondere eines Rohres,
- mit einem äußeren rohrförmigen Fittingkörper (6) und
- mit einem inneren rohrförmigen Fittingkörper (12),
- wobei der äußere Fittingkörper (6) einen zumindest teilweise aus Kunststoff bestehenden äußeren Stützabschnitt (8) zum Einführen in das rohrförmige Ende (18) aufweist,
- wobei der innere Fittingkörper (12) einen zumindest teilweise aus Metall bestehenden inneren Stützabschnitt (14) zum Einführen in das rohrförmige Ende (18) aufweist,
- wobei der innere Stützabschnitt (14) zumindest teilweise innerhalb des äußeren Stützabschnitts (8) angeordnet ist,
- wobei die Innenumfangsfläche (20) des äußeren Stützabschnitts (8) und die Außenumfangsfläche (22) des inneren Stützabschnitts (14) bereichsweise (24a, 24b, 24c) gegeneinander abgedichtet sind und
- wobei zwischen der Innenumfangsfläche (20) des äußeren Stützabschnitts (8) und der Außenumfangsfläche (22) des inneren Stützabschnitts (14) mindestens ein Hohlraum (28a, 28b) gebildet ist,
**dadurch gekennzeichnet,**
**dass** auf der Außenumfangsfläche (30) des äußeren Stützabschnitts (8) mindestens eine radial auswärtige Erhöhung (32a, 32b), insbesondere in Form einer Profilierung, vorgesehen ist, welche zumindest teilweise im Bereich des mindestens einen Hohlraums (28a, 28b) angeordnet ist.

2. Fitting nach Anspruch 1,
**dadurch gekennzeichnet,**
**dass** mindestens ein Hohlraum (28a, 28b) zwischen der Innenumfangsfläche (20) des äußeren Stützabschnitts (8) und der Außenumfangsfläche (22) des inneren Stützabschnitts (14) ein mit Luft gefüllter, vorzugsweise ringförmig umlaufender, Hohlraum (28a, 28b) ist.

3. Fitting nach einem der Ansprüche 1 oder 2,
**dadurch gekennzeichnet,**
**dass** mindestens ein Hohlraum (28, 28b) zwischen der Innenumfangsfläche (20) des äußeren Stützabschnitts (8) und der Außenumfangsfläche (22) des inneren Stützabschnitts (14) durch mindestens eine Aussparung auf der Außenumfangsfläche (22) des inneren Stützabschnitts (14) und/oder der Innenumfangsfläche (20) des äußeren Stützabschnitts (8) gebildet ist.

4. Fitting nach einem Ansprüche 1 bis 3,
**dadurch gekennzeichnet,**
**dass** die Innenumfangsfläche (20) des äußeren Stützabschnitts (8) und die Außenumfangsfläche (22) des inneren Stützabschnitts (14) mittels einer kraftschlüssigen Verbindung, insbesondere einer Presspassung, bereichsweise gegeneinander abgedichtet sind.

5. Fitting nach einem der Ansprüche 1 bis 4,
**dadurch gekennzeichnet,**
**dass** das Fitting (2) dichtringfrei, insbesondere dichtelementfrei, ausgebildet ist.

6. Fitting nach einem der Ansprüche 1 bis 5,
**dadurch gekennzeichnet,**
**dass** das dem rohrförmigen Ende (18) zugewandte Ende (6a) des äußeren Stützabschnitts (8) über das dem rohrförmigen Ende (18) zugewandte Ende (12a) des inneren Stützabschnitts (14) in axialer Richtung hinausragt.

7. Fitting nach einem der Ansprüche 1 bis 6,
**dadurch gekennzeichnet,**
**dass** das dem rohrförmigen Ende (12) abgewandte Ende des inneren Fittingkörpers (12) über das dem rohrförmigen Ende (18) abgewandte Ende des äußeren Fittingkörpers (6) in axialer Richtung hinausragt.

8. Fitting nach einem der Ansprüche 1 bis 7,
**dadurch gekennzeichnet,**
**dass** der innere Fittingkörper (12), insbesondere der innere Stützabschnitt (14), zumindest teilweise aus Kupfer, Messing, Aluminium und/oder Stahl, insbesondere ferritischem oder austenitischem Edelstahl, besteht oder einer Legierung oder Kombination davon.

9. Fitting nach einem der Ansprüche 1 bis 8,
**dadurch gekennzeichnet,**
**dass** der äußere Fittingkörper (6), insbesondere der äußere Stützabschnitt (8), zumindest teilweise aus Polyphenylsulfon (PPSU), Polyvenylidenfluorid (PVDF), unvernetztem Polyethylen (PE-RT), vernetztem Polyethylen (PE-Xa, PE-Xb, PE-Xc), Polybuten und/oder Polypropylen besteht.

10. System
- mit einem Fitting (2) nach einem der Ansprüche 1 bis 9 und
- mit einer Außenhülse (4),
- wobei zwischen der Innenumfangsfläche (38) der Außenhülse (4) und der Außenumfangsfläche (30) des äußeren Stützabschnitts (8) eine ringförmig umlaufende Aufnahme (40) für das zu verbindende rohrförmige Ende (18) gebildet wird.

11. System nach Anspruch 10,
**dadurch gekennzeichnet, dass**
die Außenhülse (4) direkt oder indirekt mit dem inneren und/oder mit dem äußeren Fittingkörper (6), insbesondere mit einem sich an den äußeren Stützabschnitt (8) anschließenden Grundabschnitt (10) des äußeren Fittingkörpers (6), verbunden ist.

12. Dichte Verbindung
- mit einem Fitting (2) nach einem der Ansprüche 1 bis 9 und
- mit einem rohrförmigen Ende (18),
- wobei das rohrförmige Ende (18) auf dem äußeren Stützabschnitt (8) des äußeren Fittingkörpers (6) positioniert ist.

13. Dichte Verbindung nach Anspruch 12,
**dadurch gekennzeichnet, dass** das rohrförmige Ende (18) das Ende eines Verbundrohrs, insbesondere eines Mehrschichtverbundrohrs, ist.

## Claims

1. Fitting for sealed connection to a tubular end (18), in particular of a tube,
- having an outer tubular fitting body (6) and
- having an inner tubular fitting body (12),
- wherein the outer fitting body (6) comprises an outer support section (8), consisting at least partially of plastic, for insertion into the tubular end (18),
- wherein the inner fitting body (12) comprises an inner support section (14), consisting at least partially of metal, for insertion into the tubular end (18),
- wherein the inner support section (14) is at least partially arranged inside the outer support section (8),
- wherein the inner circumferential surface (20) of the outer support section (8) and the outer circumferential surface (22) of the inner support section (14) are sealed against one another in sections (24a, 24b, 24c), and
- wherein at least one cavity (28a, 28b) is formed between the inner circumferential surface (20) of the outer support section (8) and the outer circumferential section surface (22) of the inner support section (14), **characterised in that**
at least one radially outward elevation (32a, 32b) is provided on the outer circumferential surface (30) of the outer support section (8), particularly in the form of a profiling, which is arranged at least partially in the region of the at least one cavity (28a, 28b).

2. Fitting according to Claim 1,
**characterised in that**
at least one cavity (28a, 28b) between the inner circumferential surface (20) of the outer support section (8) and the outer circumferential surface (22) of the inner support section (14) is an air-filled, preferably annularly circumferential cavity (28a, 28b).

3. Fitting according to Claim 1 or 2,
**characterised in that**
at least one cavity (28, 28b) between the inner circumferential surface (20) of the outer support section (8) and the outer circumferential surface (22) of the inner support section (14) is formed by at least one recess on the outer circumferential surface (22) of the inner support section (14) and/or the inner circumferential surface (20) of the outer support section (8).

4. Fitting according to any one of Claims 1 to 3,
**characterised in that**
the inner circumferential surface (20) of the outer support section (8) and the outer circumferential surface (22) of the inner support section (14) are sealed against one another in sections by means of a force-fit connection, in particular a press fit.

5. Fitting according to any one of Claims 1 to 4,
**characterised in that**
the fitting (2) is configured without a sealing ring, in particular without a sealing element.

6. Fitting according to any one of Claims 1 to 5,
**characterised in that**
the end (6a) of the outer support section (8) facing towards the tubular end (18) extends beyond the end (12a) of the inner support section (14) facing towards the tubular end (18) in the axial direction.

7. Fitting according to any one of Claims 1 to 6,
**characterised in that**
the end of the inner fitting body (12) facing away from the tubular end (12) extends beyond the end of the outer fitting body (6) facing away from the tubular end (18) in the axial direction.

8. Fitting according to any one of Claims 1 to 7,
**characterised in that**
the inner fitting body (12), in particular the inner support section (14), consists at least partially of copper, brass, aluminium and/or steel, in particular ferritic or austenitic stainless steel, or an alloy or combination thereof.

9. Fitting according to any one of Claims 1 to 8,
**characterised in that**
the outer fitting body (6), in particular the outer support section (8), consists at least partially of polyphenyl sulfone (PPSU), polyvinylidene fluoride (PVDF), non-crosslinked polyethylene (PE-RT), crosslinked polyethylene (PE-Xa, PE-Xb, PE-Xc), polybutene and/or polypropylene.

10. System
- having a fitting (2) according to any one of Claims 1 to 9, and
- having an outer sleeve (4),
- wherein an annularly circumferential recess (40) for the tubular end (18) to be connected is formed between the inner circumferential surface (38) of the outer sleeve (4) and the outer circumferential surface (30) of the outer support section (8).

11. System according to Claim 10,
**characterised in that**
the outer sleeve (4) is connected directly or indirectly to the inner and/or the outer fitting body (6), in particular to a base section (10) adjoining the outer support section (8) of the outer fitting body (6).

12. Sealed connection,
- having a fitting (2) according to any one of Claims 1 to 9, and
- having a tubular end (18),
- wherein the tubular end (18) is positioned on the outer support section (8) of the outer fitting body (6).

13. Sealed connection according to Claim 12,
**characterised in that** the tubular end (18) is the end of a composite tube, in particular of a multilayer composite tube.

## Revendications

1. Raccord pour la liaison étanche à une extrémité tubulaire (18), de préférence d'un tube,
- avec un corps de raccord tubulaire extérieur (6), et
- avec un corps de raccord tubulaire intérieur (12),
- sachant que le corps de raccord extérieur (6) est doté d'une section de support extérieure (8), au moins partiellement en matière plastique, qui est destinée à être insérée dans l'extrémité tubulaire (18),
- sachant que le corps de raccord intérieur (12) est doté d'une section de support intérieure (14), au moins partiellement en métal, qui est destinée à être insérée dans l'extrémité tubulaire (18),
- sachant que la section de support intérieure (14) est disposée, au moins partiellement, à l'intérieur de la section de support extérieure (8),
- sachant que la face périphérique, intérieure (20) de la section de support extérieure (8) et la face périphérique extérieure (22) de la section de support intérieure (14) sont étanchéifiées par rapport l'une à l'autre, au moins par sections (24a, 24b, 24c), et
- sachant qu'au moins un espace creux (28a, 28b) est formé entre la face périphérique, intérieure (20) de la section de support extérieure (8) et la face périphérique extérieure (22) de la section de support intérieure (14),
**caractérisé en ce que**, sur la face périphérique extérieure (30) de la section de support extérieure (8), est prévu au moins une élévation extérieure radialement (32a, 32b), en particulier de forme profilée, qui est disposée, au moins partiellement, dans la région de l'espace creux (28a, 28b) au moins prévu.

2. Raccord selon la revendication 1,
**caractérisé en ce qu**' au moins un espace creux (28a, 28b), prévu entre la face périphérique, intérieure (20) de la section de support extérieure (8) et la face périphérique extérieure (22) de la section de support intérieure (14), est un espace creux (28a, 28b), présentant de préférence la forme d'un anneau continu, qui est rempli d'air.

3. Raccord selon revendication 1 ou 2,
**caractérisé en ce qu**' au moins un espace creux (28a, 28b), prévu entre la face périphérique, intérieure (20) de la section de support extérieure (8) et la face périphérique extérieure (22) de la section de support intérieure (14), est formé par un évidement, prévu sur la face périphérique extérieure (22) de la section de support intérieure (14) et / ou de la face périphérique, intérieure (20) de la section de support extérieure (8).

4. Raccord selon l'une des revendications 1 à 3,
**caractérisé en ce que** la face périphérique, intérieure (20) de la section de support extérieure (8) et la face périphérique extérieure (22) de la section de support intérieure (14) sont étanchéifiées l'une par rapport à l'autre, au moins partiellement, par adhérence, en particulier par ajustement serré.

5. Raccord selon l'une des revendications 1 à 4,
**caractérisé en ce que** ledit raccord (2) est de conception exempte de bague d'étanchéité, en particulier exempte d'élément d'étanchéité.

6. Raccord selon l'une des revendications 1 à 5,
**caractérisé en ce que** l'extrémité (6a) de la section de support extérieure (8), orientée vers l'extrémité tubulaire (18), fait saillie, dans la direction axiale, au-dessus de l'extrémité (12a) de la section de support intérieure (14), orientée vers l'extrémité tubulaire (18).

7. Raccord selon l'une des revendications 1 à 6,
**caractérisé en ce que** l'extrémité du corps de raccord intérieur (12), opposée à l'extrémité tubulaire (18), fait saillie, dans la direction axiale, au-dessus de l'extrémité du corps de raccord extérieur (6), opposée à l'extrémité tubulaire (18).

8. Raccord selon l'une des revendications 1 à 7,
**caractérisé en ce que** le corps de raccord intérieur (12), en particulier la section de support intérieure (14), consiste, au moins partiellement, en cuivre, en laiton, en aluminium et / ou en acier, en particulier en acier ferrique ou austénitique, ou en un alliage ou une combinaison de ceux-ci.

9. Raccord selon l'une des revendications 1 à 8,
**caractérisé en ce que** le corps de raccord extérieur (6), en particulier la section de support extérieure (8), consiste, au moins partiellement, en polysulfone de phénylène (PPSU), en polyfluorure de vinylidène (PVDF), en polyéthylène non réticulé (PE-RT), en polyéthylène réticulé (PE-Xa, PE-Xb, PE-Xc), en polybutène et / ou en polypropylène.

10. Système
- avec un raccord (2) selon l'une des revendications 1 à 9, et
- avec une douille extérieure (4),
- sachant que, entre la face périphérique intérieure (38) de la douille extérieure (4) et la face périphérique extérieure (30) de la section de support extérieure (8), un réceptacle (40) annulaire est formé pour recevoir l'extrémité tubulaire (18) devant être raccordée.

11. Système selon la revendication 10,
**caractérisé en ce que** la douille extérieure (4) est reliée directement ou indirectement au corps de raccord intérieur et / ou au corps de raccord extérieur (6), en particulier à une section de base (10) du corps de raccord extérieur (6), faisant suite à la section de support extérieure (8).

12. Liaison étanche
- avec un raccord (2) selon l'une des revendications 1 à 9, et
- avec une extrémité tubulaire (18),
- sachant que l'extrémité tubulaire (18) est positionnée sur la section de support extérieure (8) du corps de raccord extérieur (6).

13. Liaison étanche selon la revendication 12,
**caractérisée en ce que** l'extrémité tubulaire (18) est l'extrémité d'un tube composite, de préférence d'un tube composite multicouche.
